# EUROPEAN PATENT APPLICATION

(11) **EP 3 135 541 A2**
(43) Date of publication of application: **01.03.2017**
(21) Application number: 16180929.8
(22) Date of filing: 25.07.2016
(51) Int. Cl.: B60R 19/00

(54) **ENERGY ABSORBING STRUCTURE OF VEHICLE**

(30) Priority: 31.08.2015 JP 2015170436
(71) Applicant: Toyota Jidosha Kabushiki Kaisha, Toyota-shi, Aichi-ken, 471-8571 (JP)
(72) Inventor: Kitakata, Shintaro, Toyota-shi, Aichi-ken, 471-8571 (JP); Goto, Toshihiro, Toyota-shi, Aichi-ken, 471-8571 (JP); Hashimoto, Hiroki, Toyota-shi, Aichi-ken, 471-8571 (JP); Hashida, Shigenori, Toyota-shi, Aichi-ken, 471-8571 (JP)
(74) Representative: Intès, Didier Gérard André

(57) **Abstract**

An energy absorbing structure of a vehicle includes: a bumper reinforcement (16) that is configured to extend along a vehicle transverse direction; an energy absorbing body (14A) that is provided at a vehicle longitudinal direction inner side with respect to the bumper reinforcement; and a guide portion (22) that is fixed to the bumper reinforcement and is disposed at an interior of the energy absorbing body. The guide portion includes: a plurality of abutting portions that, at a time of a collision, are configured to contact walls (14T, 14I, 140, 14B) that structure the energy absorbing body; and a relief portion that is provided between the plurality of abutting portions, and at which an interval between the relief portion and one of said walls is set to be larger than an interval between the abutting portion and said wall, a space being formed between said wall and the relief portion that is dimensioned to receive, at a time of a collision of the vehicle, a crushed portion of the energy absorbing body.

## Description

### BACKGROUND

### Technical Field

The present disclosure relates to an energy absorbing structure of a vehicle.

### Related Art

Japanese Patent Application Laid-Open (JP-A) No. 2005-233263 discloses an energy absorbing structure of a vehicle that includes a crash box (an energy absorbing body) that is tubular and is formed from a fiber-reinforced resin, and a pushing member (a guiding member) that has a convex portion that abuts the inner side of the crash box.

A structure provided with a convex portion (a guiding portion) that abuts the inner side of a crash box, such as the aforementioned related art, suppresses the occurrence of positional offset of the crash box with respect to the bumper reinforcement at the time of a collision of the vehicle.

However, at the time when the crash box is successively crushed at the time of a collision of the vehicle, a portion of the crash box that is crushed (a crushed portion) is displaced into a space between the crash box and the guide portion. When the crash box receives load in the direction orthogonal to the axis thereof from this crushed portion that has been displaced into a space between the crash box and the guide portion, there is the concern that the successive deformation of the crash box will be hindered and the amount of energy that is absorbed will lessen.

### SUMMARY

In view of the above-described circumstances, the present disclosure provides an energy absorbing structure of a vehicle that can obtain a stable energy absorbing characteristic, a guide portion being provided at the interior of an energy absorbing body that is tubular and that is formed from a fiber-reinforced resin.

An energy absorbing structure of a vehicle of a first aspect of the present disclosure includes: a bumper reinforcement that is configured to extend along a vehicle transverse direction at a vehicle front end portion or at a vehicle rear end portion; an energy absorbing body that is tubular and that is formed from a fiber-reinforced resin, and that is provided at a vehicle longitudinal direction inner side with respect to the bumper reinforcement, and that is configured to be crushed at a time of a collision of the vehicle; and a guide portion that is fixed to the bumper reinforcement and is disposed at an interior of the energy absorbing body, the guide portion including: a plurality of abutting portions that are configured to contact, from an inner side, at a time of a collision of the vehicle, walls that structure the energy absorbing body; and a relief portion that is provided between the plurality of abutting portions, and at which an interval between the relief portion and one of said walls is set to be larger than an interval between the abutting portions and said wall, a space being formed between said wall and the relief portion that is configured to receive, at a time of a collision of the vehicle , a crushed portion of the energy absorbing body.

In the energy absorbing structure of a vehicle of the first aspect, the energy absorbing body, that is tubular and that is formed from a fiber-reinforced resin, is provided at the vehicle longitudinal direction inner side of the bumper reinforcement (hereinafter called bumper RF) that is configured to extend along the vehicle transverse direction at the vehicle front end portion or the vehicle rear end portion. Therefore, when load toward the vehicle longitudinal direction inner side is inputted to the bumper RF due to a collision of the vehicle, the energy absorbing body, that is formed from a fiber-reinforced resin and that is disposed at the vehicle longitudinal direction inner side with respect to the bumper RF, is crushed. Due thereto, collision energy is absorbed.

Further, the guide portion is fixed to the bumper RF, and the guide portion is disposed at the interior of the energy absorbing body. The guide portion is structured to include abutting portions that, at the time of a collision of the vehicle, are configured to contact, from the inner side, the walls that structure the energy absorbing body. At the time of a vehicle collision, due to the abutting portions of the guide portion, that is fixed to the bumper RF, contacting, from the inner side, the walls that structure the energy absorbing body, the occurrence of positional offset of the energy absorbing body with respect to the bumper RF is reduced.

Further, the guide portion is structured to include the relief portion, and the relief portion is provided between the plural abutting portions. The interval between the relief portion and a wall that structures the energy absorbing body is set to be larger than the interval between the abutting portion and this wall. Therefore, at the time of a collision of the vehicle, a space is formed between the relief portion and one of the walls that structure the energy absorbing body, said space being dimensioned so that a portion of the energy absorbing body that is crushed (a crushed portion) can escape into it.

Namely, a portion of the portion, that is crushed, of the energy absorbing body at the time of a collision of the vehicle (i.e., a portion of the crushed portion), is displaced into the interior of (within the tube of) the energy absorbing body. However, due to a space being formed between the relief portion and a wall that structures the energy absorbing body, the crushed portion of the energy absorbing body can escape into this space. Therefore, the energy absorbing body receiving load that is orthogonal to the axial direction thereof, due to a crushed portion that has been displaced into the interior of the energy absorbing body, is reduced. Therefore, successive deformation of the energy absorbing body is not hindered, and the energy absorption amount does not decrease.

In an energy absorbing structure of a vehicle of a second aspect of the present invention, combined with the first aspect, the energy absorbing body is made to have a tubular shape of substantially rectangular cross-section, and the abutting portions and the relief portions are provided respectively for each of the walls.

In the energy absorbing structure of a vehicle of the second aspect, the abutting portion and the relief portion are provided respectively for each of the walls that structure the energy absorbing body that has a substantially rectangular cross-section tubular shape. Therefore, positional offset between the energy absorbing body and the bumper RF is reduced appropriately in all of the directions of the vehicle vertical direction and the vehicle transverse direction, and the inputting of load from crushed portions to the respective walls is reduced.

In an energy absorbing structure of a vehicle of a third aspect of the present invention, combined with at least one of the first aspect and the second aspect, the abutting portions include surfaces that are provided substantially parallel to the respective walls.

The term "respective" relates to the wall of the energy absorbing body that the considered abutting portion is configured to come in contact with, at a time of a collision of the vehicle.

In the energy absorbing structure of a vehicle of the third aspect, the abutting portion, that contacts the respective wall of the energy absorbing body at the time of a collision of the vehicle, includes a surface that is provided substantially parallel to that wall. Therefore, a large load being inputted locally to the energy absorbing body is reduced. Due thereto, the risk that the energy absorbing body would be destroyed by contact with the abutting portion is reduced.

In an energy absorbing structure of a vehicle of a fourth aspect of the present invention, combined with at least one of the first aspect and the second aspect, the guide portion includes plural ribs that extend radially toward the wall of the energy absorbing body, and the abutting portions include end portions of the ribs that extend toward the walls of the energy absorbing body.

In the energy absorbing structure of a vehicle of the fourth aspect, the abutting portions, that contact the walls of the energy absorbing body at the time of a collision of the vehicle, include the end portions of ribs that are extend radially toward the walls of the energy absorbing body. Therefore, the portions between the plural ribs form spaces into which crushed portions of the energy absorbing body can escape, and it is easy to make these spaces wide. Due thereto, load, that is orthogonal to the axis of the energy absorbing body, being inputted to the energy absorbing body by a crushed portion is reduced even more.

### BRIEF DESCRIPTION OF THE DRAWINGS

Exemplary embodiments of the present invention will be described in detail based on the following figures, wherein:
Fig. 1 is an exploded perspective view in which the overall structure of a vehicle front portion structure, to which an energy absorbing structure of a vehicle of an embodiment is applied, is shown in a state in which a bumper RF and crash boxes are disassembled;
Fig. 2A is a perspective view showing, in an enlarged manner, a guide member of the embodiment;
Fig. 2B is a view that is seen from the vehicle rear side and shows, in an enlarged manner, the guide member of the embodiment;
Fig. 3A is a cross-sectional view that corresponds to abutting portions and that shows the vehicle front portion structure of the embodiment in a state of being cut along a plane that is orthogonal to the vehicle transverse direction;
Fig. 3B is a cross-sectional view that corresponds to relief portions and that shows the vehicle front portion structure of the embodiment in a state of being cut along a plane that is orthogonal to the vehicle transverse direction;
Fig. 4A is a cross-sectional view that corresponds to the abutting portions and that shows the vehicle front portion structure of the embodiment in a state of being cut along a plane that is orthogonal to the vehicle vertical direction;
Fig. 4B is a cross-sectional view that corresponds to the relief portions and that shows the vehicle front portion structure of the embodiment in a state of being cut along a plane that is orthogonal to the vehicle vertical direction;
Fig. 5A is a drawing showing the situation when an energy absorbing body is crushed at the vehicle front portion structure relating to the embodiment;
Fig. 5B is a drawing showing the situation when the energy absorbing body is crushed at the vehicle front portion structure relating to the embodiment;
Fig. 6 is a perspective view showing a guide member relating to a comparative example;

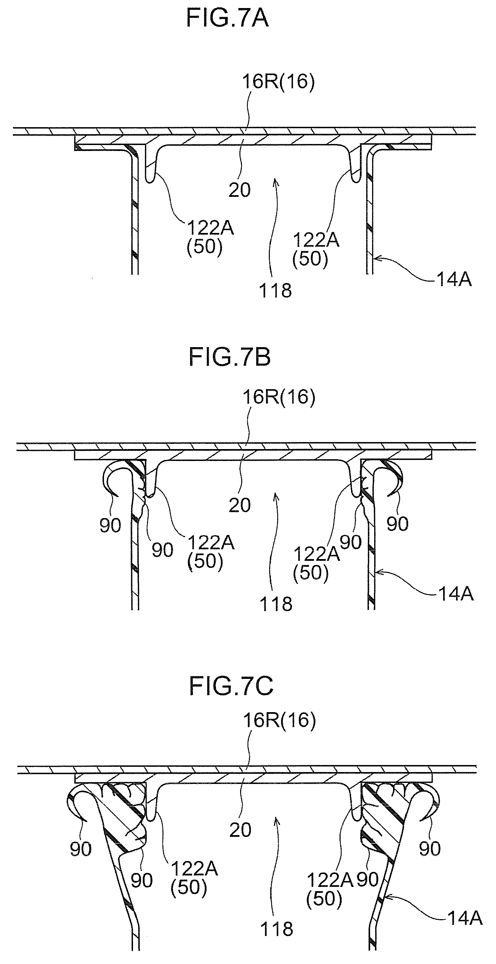

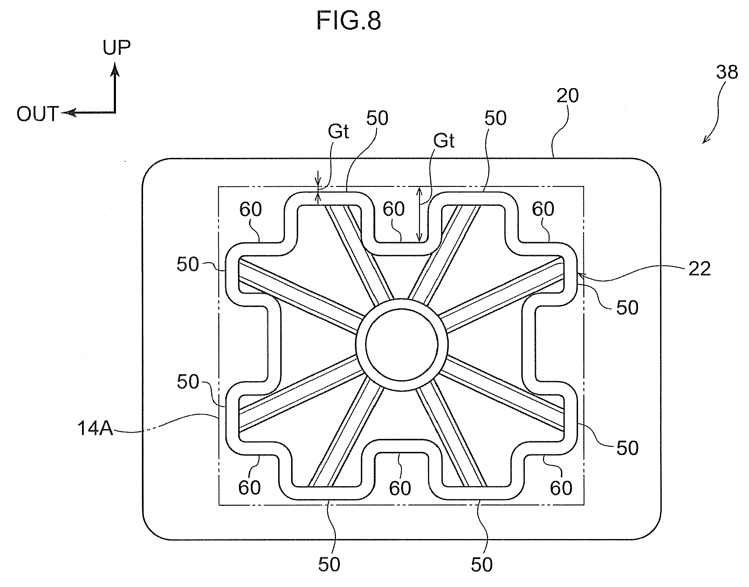

Fig. 7A is a drawing showing the situation when the energy absorbing body is crushed, at a vehicle front portion structure that has the guide member relating to the comparative example; Fig. 7B is a drawing showing the situation when the energy absorbing body is crushed, at the vehicle front portion structure that has the guide member relating to the comparative example; Fig. 7C is a drawing showing the situation when the energy absorbing body is crushed, at the vehicle front portion structure that has the guide member relating to the comparative example; Fig. 8 is a drawing that is seen from the vehicle rear side and shows a guide member relating to a first modified example;
Fig. 9 is a drawing that is seen from the vehicle rear side and shows a guide member relating to a second modified example; and
Fig. 10 is a drawing that is seen from the vehicle rear side and shows a guide member relating to a third modified example.

### DETAILED DESCRIPTION

A vehicle front portion structure S, to which an energy absorbing structure of a vehicle relating to an embodiment of the present invention is applied, is described hereinafter by using the drawings. Note that arrow FR, arrow UP, arrow OUT and arrow W that are shown appropriately in the respective drawings respectively indicate the frontward direction (advancing direction) of a vehicle, the upward direction, an outer side in the vehicle transverse direction, and the vehicle transverse direction. Hereinafter, when merely longitudinal, left-right and vertical directions are used, they indicate respectively the longitudinal direction of the vehicle, the left-right direction of the vehicle (the vehicle transverse direction), and the vertical direction of the vehicle, unless otherwise indicated.

### [Overall Structure]

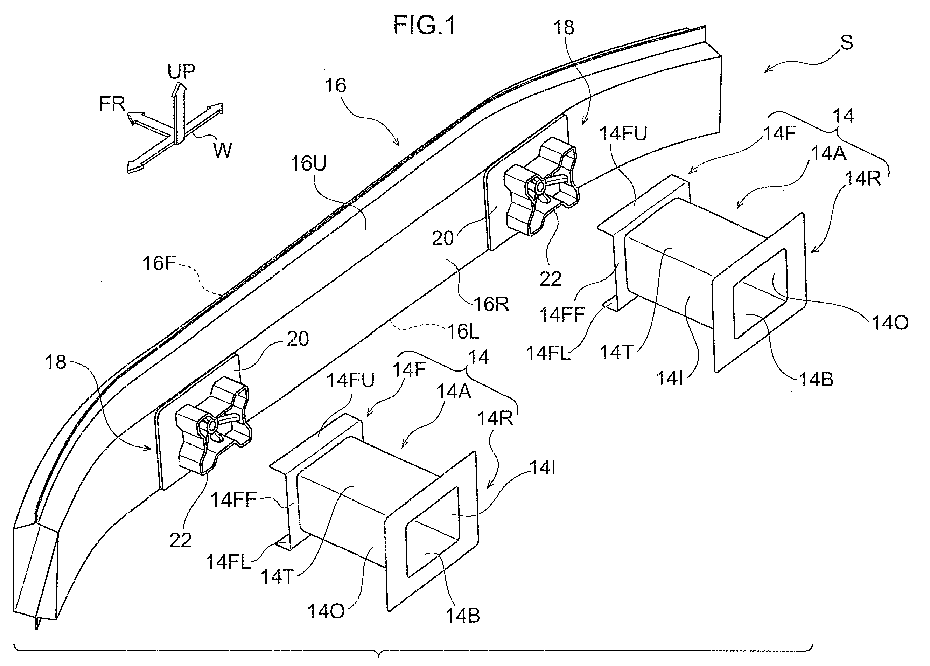

The overall structure of the vehicle front portion structure S of the present embodiment is shown in Fig. 1 in an exploded perspective view. As shown in this drawing, the vehicle front portion structure S has, at the vehicle front end portion, a bumper RF 16 that extends in the vehicle transverse direction. A pair of left and right crash boxes 14 are joined to the vehicle rear side of the bumper RF 16. Front side members (not illustrated), that are skeleton members and that are long in the vehicle longitudinal direction, are joined to the rear sides of the pair of left and right crash boxes 14, coaxially with the crash boxes 14. Further, guide members 18 are joined to a rear surface 16R that is at the vehicle rear side of the bumper RF 16, such that portions of the guide members 18 (peripheral walls 22 that serve as "guide portions" and that are described later) are disposed at the interiors of the crash boxes 14.

### [Bumper RF]

The bumper RF 16 is a closed cross-sectional structure that is formed in a substantially rectangular shape as seen in a cross-section orthogonal to the length direction thereof. The bumper RF 16 has an upper surface 16U that faces upward, a lower surface 16L that faces downward, the rear surface 16R that faces rearward, and a front surface 16F that faces forward.

### [Crash Boxes]

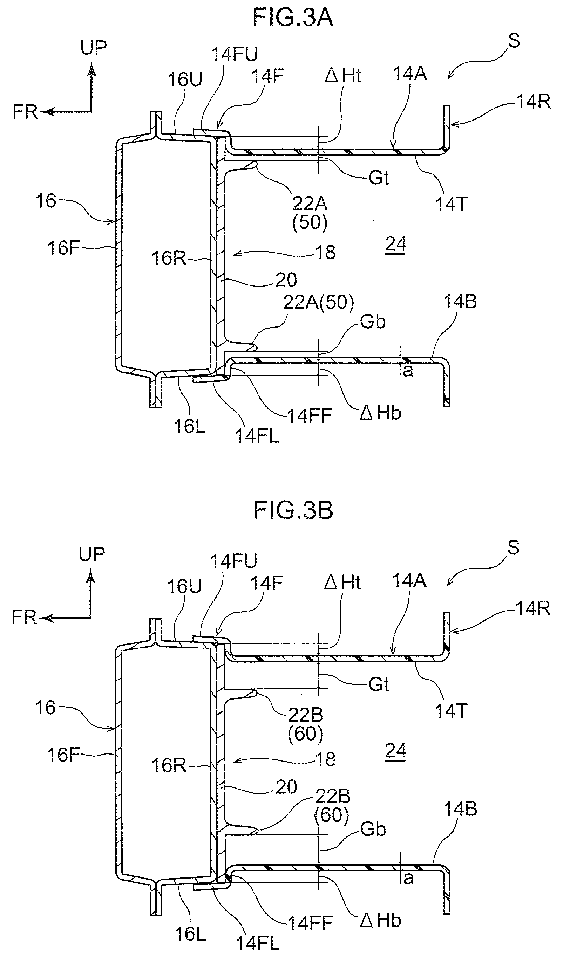

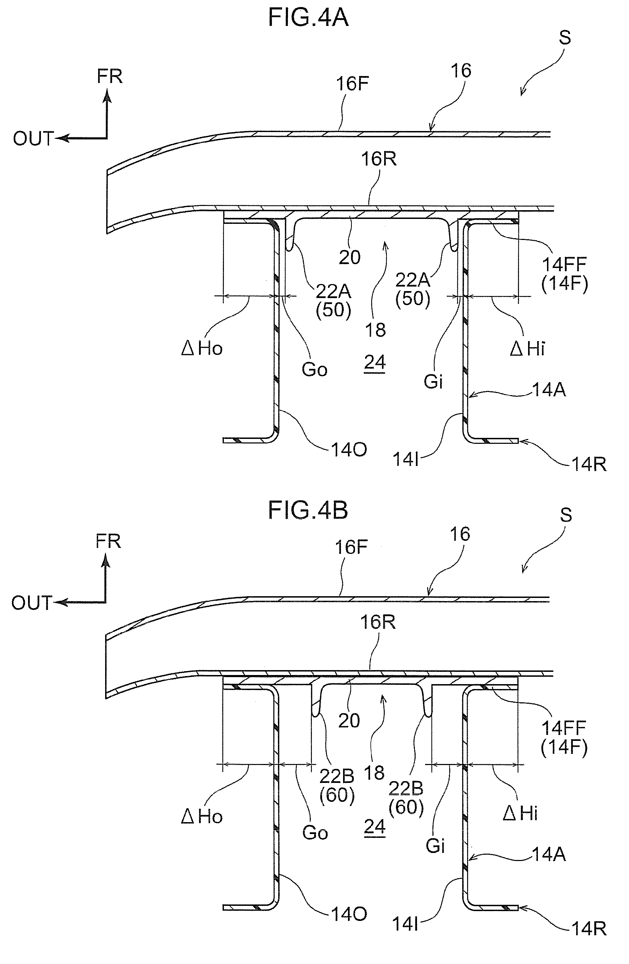

The crash boxes 14 are joined to the vehicle rear side of the bumper RF 16 (refer to Fig: 3A, Fig. 3B, Fig. 4A and Fig. 4B). The crash boxes 14 are provided in parallel as a left/right pair.

The crash box 14 is formed from a fiber-reinforced resin. The crash box 14 is structured to include an energy absorbing body 14A that is tubular, a front flange portion 14F that serves as a joining portion and that is provided at the front end of the energy absorbing body 14A, and a rear flange portion 14R that is provided at the rear end of the energy absorbing body 14A.

The energy absorbing body 14A is shaped as a tube whose cross-section is substantially rectangular (is made to be a closed cross-sectional structure), and is structured to include an upper side wall 14T that faces upward, a lower side wall 14B that faces downward, an inner side wall 14I that faces toward the vehicle transverse direction inner side, and an outer side wall 140 that faces toward the vehicle transverse direction outer side.

The front flange portion 14F is formed so as to extend-out in the vertical direction from the front end of the energy absorbing body 14A, and is joined to the bumper RF 16 in a state of holding the upper surface 16U and the lower surface 16L of the bumper RF 16. For example, adhesion, welding, rivets, or the like are employed in this joining. Concretely, the front flange portion 14F has a front wall 14FF that extends upward and downward and to the left and the right from the front end of the energy absorbing body 14A, an upper wall 14FU that extends frontward from the upper end of the front wall 14FF, and a lower wall 14FL that extends frontward from the lower end of the front wall 14FF.

The front wall 14FF of the front flange portion 14F and the front end of the energy absorbing body 14A both are thrust against a mounting plate 20 of the guide member 18 that is described later. In this state, the upper wall 14FU and the lower wall 14FL are joined respectively to the upper surface 16U and the lower surface 16L of the bumper RF 16. Due thereto, the front flange portion 14F that serves as a joining portion is joined to the two vertical direction end portions of the bumper RF 16. A form of joining such as, for example, adhesion, welding, rivets, or the like, is employed in this joining. Further, at the front wall 14FF, the mounting plate 20 of the guide member 18 and the rear surface 16R of the bumper RF 16 are fastened together.

### [Guide Member]

Further, the vehicle front portion structure S has the guide member 18 that is structured to include the peripheral wall 22 that serves as the "guide portion". The guide member 18 is structured to include the mounting plate 20 that is joined to the rear surface 16R of the bumper RF 16, and the peripheral wall 22 that is formed to project-out from the mounting plate 20. Namely, the peripheral wall 22 of the guide member 18 projects-out rearward with respect to the rear surface 16R of the bumper RF 16. Further, as shown in Fig. 3A, Fig. 3B, Fig. 4A and Fig. 4B, the peripheral wall 22 of the guide member 18 is disposed within an interior 24 of the energy absorbing body 14A that has a closed cross-sectional structure, when the guide member 18 and the crash box 14 are assembled together.

The guide member 18 is structured so as to suppress positional offset of the energy absorbing body 14A with respect to the bumper RF 16 when the joining of the energy absorbing body 14A to the bumper RF 16 by the front flange portion 14F is cancelled (i.e. when the crash box 14 is separated from the bumper RF 16). In other words, the guide member 18 is a guide member that guides in the longitudinal direction toward the appropriate places of the bumper RF 16 the respective portions of the energy absorbing body 14A, said portions being compressively destroyed successively from the front.

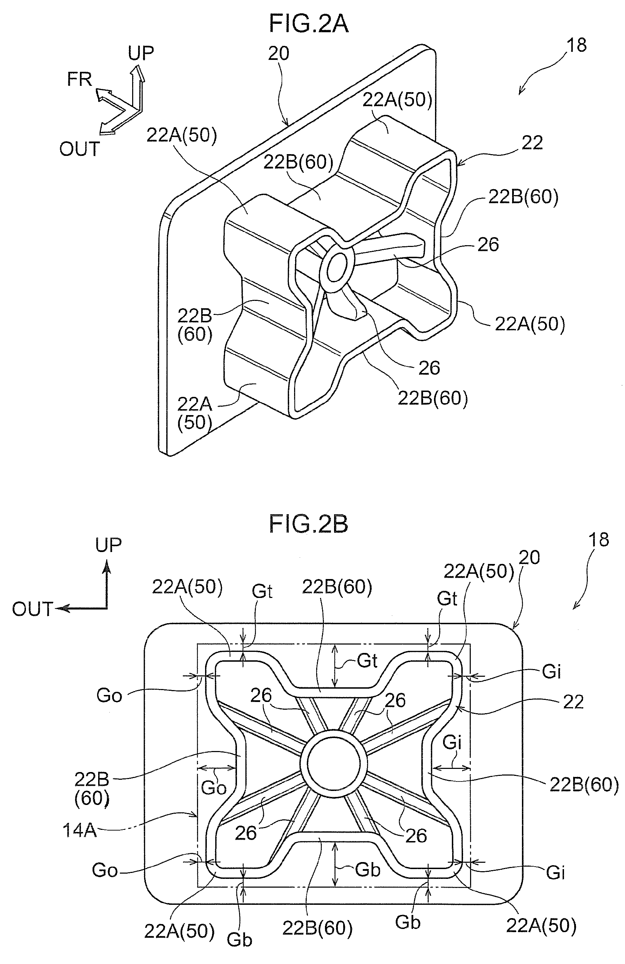

Concretely, as shown in Fig. 2A and Fig. 2B, the guide member 18 is structured to include, as the main portions thereof, the mounting plate 20 that is joined to the rear surface 16R of the bumper RF 16 in a state of being superposed thereon, the peripheral wall 22 that projects from the mounting plate 20 toward the vehicle rear side, and plural ribs 26 that are formed in a radial form from the center of the mounting plate 20 and that reinforce the mounting plate 20 and the peripheral wall 22.

The mounting plate 20 is made to be a substantially rectangular plate shape. As shown in Fig. 3A and Fig. 3B, the upper end of the mounting plate 20 substantially coincides with the upper end of the rear surface 16R of the bumper RF 16, and the lower end of the mounting plate 20 substantially coincides with the lower end of the rear surface 16R of the bumper RF 16. Further, in the state in which the crash box 14 is joined to the bumper RF 16, the two vertical direction end portions of the energy absorbing body 14A are positioned between the two vertical direction end portions of the mounting plate 20. Concretely, the upper end of the mounting plate 20 extends beyond the upper side wall 14T of the energy absorbing body 14A by a distance of ΔHt, and the lower end of the mounting plate 20 extends below the lower side wall 14B of the energy absorbing body 14A by a distance of ΔHb.

Further, as shown in Fig. 4A and Fig. 4B, in the state in which the crash box 14 is joined to the bumper RF 16, the two left-right direction ends of the energy absorbing body 14A are positioned between the two left-right direction end portions of the mounting plate 20. Concretely, the vehicle transverse direction outer side end of the mounting plate 20 extends beyond the outer side wall 140 of the energy absorbing body 14A by a distance of ΔHo, and the vehicle transverse direction inner side end of the mounting plate 20 extends beyond the inner side wall 14I of the energy absorbing body 14A by a distance of ΔHi.

### [Peripheral Wall that serves as a Guide Portion]

The peripheral wall 22 projects from the mounting plate 20 toward the vehicle rear side, and, as shown in Fig. 2B is formed in a peripheral shape so as to surround the central portion of the mounting plate 20 from the periphery thereof. Further, as shown in Fig. 2B, the peripheral wall 22 is made to be a shape that can fit within the energy absorbing body 14A that is shaped as a rectangular tube, and the peripheral wall 22 is substantially rectangular as seen from a direction orthogonal to the mounting plate 20. In further detail, the peripheral wall 22 is made to be a shape in which respective side central portions 22B of the substantial rectangle are concave toward the inner side as seen from the direction orthogonal to the mounting plate 20.

### [Intervals]

The intervals between the respective walls (the upper side wall 14T, the lower side wall 14B, the inner side wall 14I, the outer side wall 140) that structure the energy absorbing body 14A, and the peripheral wall 22, are described. Note that what is called interval here is the interval in the case of measuring in the direction orthogonal to each wall of the energy absorbing body 14A.

In the following description, the intervals between the respective walls (the upper side wall 14T, the lower side wall 14B, the outer side wall 140, the inner side wall 14I) that structure the energy absorbing body 14A, and the peripheral walls 22 that face the respective walls, are respectively interval Gt, interval Gb, interval Go, interval Gi respectively as shown in Fig. 2B. The interval Gt corresponds to the upper side wall 14T, the interval Gb corresponds to the lower side wall 14B, the interval Go corresponds to the outer side wall 140, and the interval Gi corresponds to the inner side wall 14I. Note that there are cases in which the interval Gt, the interval Gb, the interval Go, and the interval Gi are collectively called the intervals G.

As shown in Fig. 2B, the intervals Gt, Gb differ (vary) in accordance with the position in the vehicle transverse direction, and are not constant over the vehicle transverse direction. Further, the intervals Go, Gi also differ (vary) in accordance with the position in the vehicle vertical direction, and are not constant over the vehicle vertical direction.

### [Abutting Portion]

The portions of the peripheral wall 22, that are distinct from the respective side central portions 22B, , i.e., comer portions 22A at the peripheral wall 22, are provided with narrow intervals between these corner portions 22A and the respective walls of the energy absorbing body 14A.

Concretely, as shown in Fig. 3A, the interval Gt at the corner portion 22A is set to be smaller than the offset amount ΔHb (Gt<ΔHb). Due thereto, even if the upper side wall 14T moves downward by the interval Gt, the state in which the lower side wall 14B and the mounting plate 20 face one another in the longitudinal direction is maintained. Further, the interval Gb at the corner portion 22A is set to be smaller than the offset amount ΔHt (Gb<ΔHt). Due thereto, even if the lower side wall 14B moves upward by the interval Gb, the state in which the upper side wall 14T and the mounting plate 20 face one another in the longitudinal direction is maintained.

Further, as shown in Fig. 4A, the interval Go at the corner portion 22A is set to be smaller than the offset amount ΔHi (Go<ΔHi). Due thereto, even if the outer side wall 140 moves toward the vehicle inner side by the interval Go, the state in which the inner side wall 14I and the mounting plate 20 face one another in the vehicle longitudinal direction is maintained. Further, the interval Gi at the corner portion 22A is set to be smaller than the offset amount ΔHo (Gi<ΔHo). Due thereto, even if the inner side wall 14I moves toward the vehicle outer side by the interval Gi, the state in which the outer side wall 140 and the mounting plate 20 face one another in the vehicle longitudinal direction is maintained.

Note that, in the present embodiment, the intervals Gt, Gb, Go, Gi at the corner portions 22A are set to be approximately 2 mm. The corner portions 22A of the peripheral wall 22 correspond to the "abutting portions" of the present invention.

### [Relief Portions]

On the other hand, the respective side central portions 22B at the peripheral wall 22 are made to be concave shapes that are recessed in directions of moving away from the respective walls of the energy absorbing body 14A. Therefore, the respective side central portions 22B are provided with relatively wide intervals between the respective side central portions 22B and the respective walls of the energy absorbing body 14A.

Concretely, the intervals Gt, Gb at the respective side central portions 22B shown in Fig. 3B are set to be wider than the intervals Gt, Gb at the corner portions 22A shown in Fig. 3A. Further, the intervals Go, Gi at the respective side central portions 22B shown in Fig. 4B are set to be wider than the intervals Go, Gi at the corner portions 22A shown in Fig. 4A.

Moreover, in the present embodiment, the intervals Gt, Gb, Go, Gi at the respective side central portions 22B are made to be greater than or equal to three times plate thickness a of the respective walls, and more preferably, are made to be greater than or equal to five times the plate thickness a. Due thereto, at the time when the respective walls of the energy absorbing body 14A are crushed successively from the vehicle front side, spaces into which the crushed portions of the respective walls can escape are formed between the respective walls and the peripheral wall 22.

Note that, in the present embodiment, the plate thickness a of each wall is approximately 3 mm, and the intervals Gt, Gb at the respective side central portions 22B are set to be approximately 9 mm or more. The respective side central portions 22B of the peripheral wall 22 correspond to the "relief portions" of the present invention.

### <Operation/Effects>

Operation and effects of the vehicle front portion structure S of the present embodiment are described next.

At the vehicle front portion structure S of the present embodiment, the energy absorbing bodies 14A, that are tubular and that are formed from a fiber-reinforced resin, are provided at the vehicle rear side of the bumper RF 16 that extends along the vehicle transverse direction at the vehicle front portion. Therefore, when load toward the vehicle rear side is inputted to the bumper RF 16 due to a front collision of the vehicle, the energy absorbing bodies 14A, that are formed from a fiber-reinforced resin and that are disposed at the vehicle rear side of the bumper RF 16, are crushed from the vehicle front side. Collision energy is thereby absorbed.

Further, the guide members 18, that are structured to include the peripheral walls 22 that serve as guide portions, are joined to the vehicle rear side of the bumper RF 16, and the peripheral walls 22 are disposed at the interiors of the energy absorbing bodies 14A. Namely, the guide portions are fixed to the bumper RF 16, and the guide portions are disposed at the interiors 24 of the energy absorbing bodies 14A. Further, the peripheral walls 22 are structured to include the corner portions 22A that serve as abutting portions 50 that, by contacting the energy absorbing bodies from the inner sides thereof at the time of a collision of the vehicle, suppress the occurrence of positional offset of the energy absorbing bodies with respect to the bumper RF 16. Therefore, at the time of a collision of the vehicle, the risk that the energy absorbing bodies 14A are offset relative to the vehicle rear side of the bumper RF 16, such an offset jeopardizing the crushing of the energy absorbing bodies 14A, is prevented or suppressed.

Further, the peripheral walls 22 are structured to include the respective side central portions 22B that serve as relief portions 60. The intervals G, between the respective side central portions 22B and the respective walls that structure the energy absorbing bodies 14A, are set to be larger than the intervals between the corner portions 22A and these walls. Further, spaces, into which the portions that are crushed (crushed portions 90) of the energy absorbing bodies 14A can escape, are formed between the respective side central portions 22B and the respective walls.

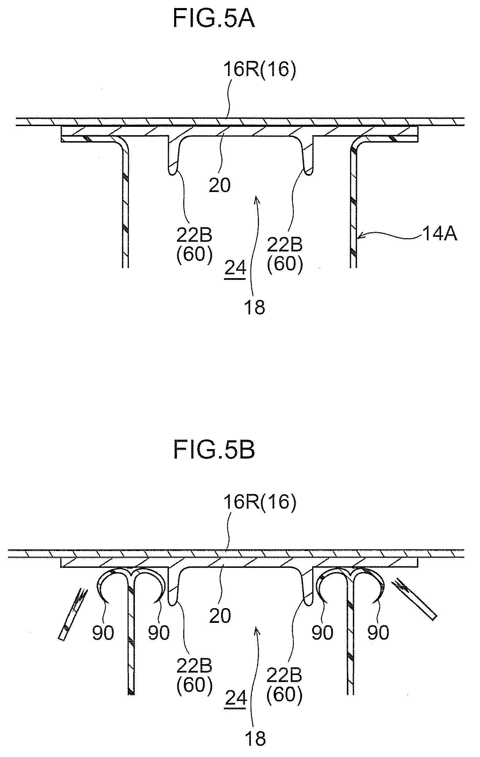

Namely, when load toward the vehicle rear side is inputted to the bumper RF 16 due to a front collision of the vehicle, the energy absorbing bodies 14A, that are formed from a fiber-reinforced resin and that are disposed at the vehicle rear side of the bumper RF 16, are crushed from the vehicle front side. In this case, portions where the respective walls are crushed (the crushed portions 90) arise at the front ends of the energy absorbing bodies 14A (see Fig. 5B). Further, portions of the crushed portions 90 enter into the interiors 24 (into the closed cross-sections) of the energy absorbing bodies 14A.

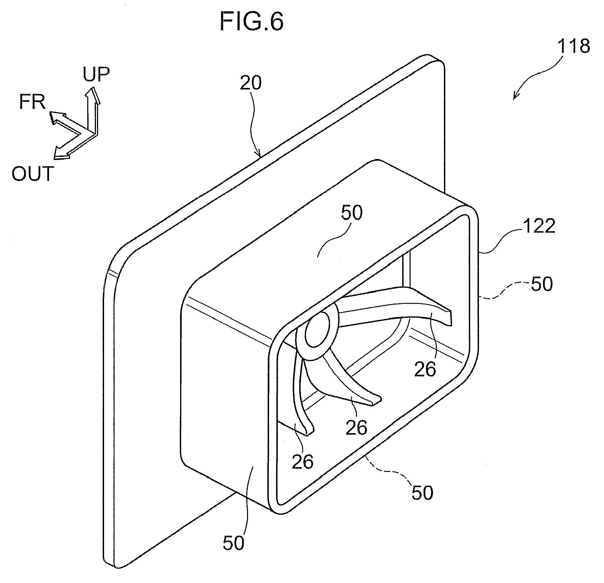

Here, a guide member 118 of a comparative example that is shown in Fig. 6 is described. At the guide member 118 of the comparative example, concave shapes are not formed at a peripheral wall 122, and the intervals between the peripheral wall 122 and the respective walls that structure the energy absorbing body 14A are constant over the entire periphery. Namely, the relief portions 60 are not formed, and the peripheral wall 122 is structured only by the abutting portions 50. Therefore, as shown in Fig. 7B, the crushed portions 90, that have been displaced into the interior of the energy absorbing body 14A, are nipped between the peripheral wall 122 and the respective walls of the energy absorbing body 14A. Further, the energy absorbing body 14A receives load, in a direction orthogonal to the axial direction of the energy absorbing body 14A (the vehicle longitudinal direction), from the nipped crushed portions 90, and, as shown in Fig. 7C, there is the concern that portions partway along the axial direction will bend. If the energy absorbing body 14A bends at a portion partway along the axial direction thereof, successive deformation is hindered, and the energy absorption amount decreases.

In contrast, at the vehicle front portion structure S of the present embodiment, due to spaces being formed between the relief portions 60 provided at the peripheral wall 22 and the respective walls that structure the energy absorbing body 14A, the portions of the energy absorbing body that are crushed (the crushed portions 90) can escape into these spaces as shown in Fig. 5B. Therefore, the energy absorbing body 14A receiving load, in the direction orthogonal to the axial direction thereof, from the crushed portions 90 that have been displaced into the interior of the energy absorbing body 14A is reduced. As a result, successive deformation of the energy absorbing body 14A is not hindered, and the energy absorption amount does not decrease.

Further, at the vehicle front portion structure S of the present embodiment, the corner portions 22A and the respective side central portions 22B, that serve respectively as the abutting portions 50 and the relief portions, are provided for each of the walls (the upper side wall 14T, the lower side wall 14B, the inner side wall 14I, the outer side wall 140) that structure the energy absorbing body 14A that is shaped as a tube of a substantially rectangular cross-section. Therefore, positional offset between the energy absorbing body 14A and the bumper RF 16 in the vehicle vertical direction and the vehicle transverse direction is reduced, and input of load from the crushed portions 90 is reduced at the respective walls.

Further, at the vehicle front portion structure S of the present embodiment, the abutting portions 50 (the corner portions 22A), that contact the respective walls of the energy absorbing body 14A at the time of a collision of the vehicle, are surfaces that are provided substantially parallel to those walls. Therefore, a large load being inputted locally to the energy absorbing body 14A is reduced. Due thereto, the risk that the energy absorbing body 14A would be destroyed by contact with the abutting portions 50 is reduced.

### [Modified Examples]

The above-described embodiment describes the guide member 18 at which the peripheral wall 22 is provided as the guide portion, the corner portions 22A of the peripheral wall 22 are made to be the abutting portions 50, and the respective side central portions 22B of the peripheral wall 22 are made to be the relief portions 60. However, the present invention is not limited to this. For example, structures relating to modified examples such as those shown in Fig. 8 through Fig. 10 may be employed. Note that these drawings are views in which the guide member is seen from the vehicle rear side, and are drawings corresponding to Fig. 2B of the above-described embodiment.

A guide member 38 relating to a first modified example shown in Fig. 8 is similar to the above-described embodiment with respect to the point that the peripheral wall 22, that projects from the mounting plate 20, is made to be the guide portion. However, the shape of the peripheral wall 22 is different, and, accompanying this, the arrangement of the abutting portions 50 and the relief portions 60 is different. Concretely, concave shapes, that are recessed in directions of moving away from the respective walls, are formed both at the peripheral wall 22 in correspondence with the portions (the corner portions of the rectangle) that face the boundaries between the respective walls at the energy absorbing body 14A that is shaped as a tube of a substantially rectangular cross-section, and at the central portions of the respective walls (the central portions of the respective sides). The concave-shaped portions at the peripheral wall 22 are made to be the relief portions 60, and the portions other than these are made to be the abutting portions 50.

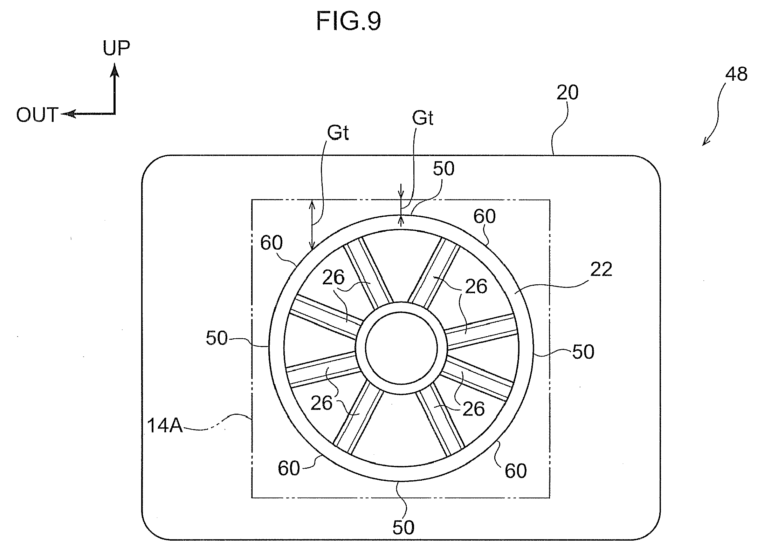

At a guide member 48 relating to a second modified example and shown in Fig. 9, the peripheral wall 22 is made to be a substantially cylindrical tube shape that is substantially circular as seen from the vehicle rear side. Because the energy absorbing body 14A is rectangular in cross-section, spaces into which the crushed portions 90 escape are formed at the portions (the corner portions of the rectangle) that face the boundaries between the respective walls of the energy absorbing body 14A. Namely, at the guide member 48 of the second modified example, the two vehicle transverse direction end portions and the two vehicle vertical direction end portions at the peripheral wall 22 that is substantially cylindrical tube shaped are made to be the abutting portions 50, and the portions other than these are made to be the relief portions 60.

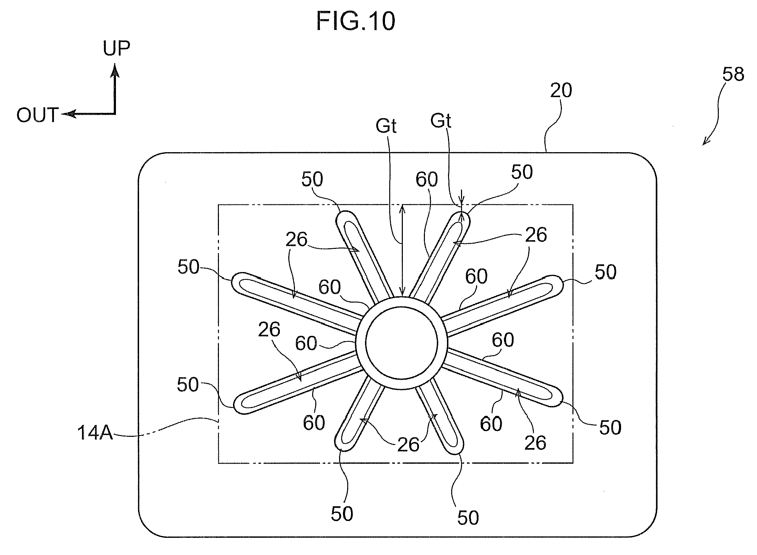

At a guide member 58 that relates to a third modified example and is shown in Fig. 10, a peripheral wall is not formed, and the plural ribs 26, that are formed in a radial form from the center of the mounting plate 20, are made to be the guide portions. Further, the outer side end portions of the radial ribs 26 are made to be the abutting portions 50, and spaces into which the crushed portions 90 escape are formed between the respective ribs 26. Namely, the portions, that are other than the outer side end portions at the ribs 26, are the relief portions 60. Therefore, in the third modified example, it is easy to make the spaces into which the crushed portions 90 escape wide, and load that is orthogonal to the axis of the energy absorbing body being inputted to the energy absorbing body by the crushed portions can be reduced even more.

### [Supplementary Description of the Above-Described Embodiment]

Note that, in the above-described embodiment, the energy absorbing body 14A is made to be a tube shape (a closed cross-sectional structure) that has a substantially rectangular cross-section, but the present invention is not limited to this, and the energy absorbing body may be any shape provided that it is tubular (a closed cross-sectional structure). Further, although the energy absorbing body 14A is joined to the bumper RF 16 via the flange portion 14F in the above-described embodiment, the form of joining the energy absorbing body 14A to the bumper RF 16 is not particularly limited. Further, the above-described embodiment is an energy absorbing structure of a vehicle that is applied to a vehicle front portion structure having the (front) bumper RF 16 as the bumper RF, but the present invention is not limited to this and may be applied to a vehicle rear portion structure that is equipped with a rear bumper reinforcement that would extend along the vehicle transverse direction at the vehicle rear end portion.

Further, in the above-described embodiment, the front ends of the energy absorbing bodies 14A are thrust against the mounting plates 20 of the guide members 18, but the present invention is not limited to this. For example, the mounting plates of the guide members may be formed to be small, and the front ends of the energy absorbing bodies may be thrust against the rear surface of the bumper RF. Namely, there may be a structure in which the mounting plates of the guide member would not be interposed between the energy absorbing bodies and the bumper RF. In this case, the offset amounts ΔHt, ΔHb, ΔHo, ΔHi are not the offset amounts from the mounting plate 20, and are the offset amounts from the rear surface 16R of the bumper RF 16.

Further, in the above-described embodiment, the bumper RF 16 and the guide members 18 are made to be separate members, and the both are joined together. However, the present invention is not limited to this. For example, the bumper RF and the guide members may be molded integrally. Note that, in this case, structures corresponding to the mounting plates 20 of the above-described embodiment may be provided, or may be not provided.

## Claims

1. An energy absorbing structure of a vehicle, comprising:
a bumper reinforcement (16) that is configured to extend along a vehicle transverse direction at a vehicle front end portion or at a vehicle rear end portion;
an energy absorbing body (14A) that is tubular and that is formed from a fiber-reinforced resin, and that is provided at a vehicle longitudinal direction inner side with respect to the bumper reinforcement, and that is configured to be crushed at a time of a collision of the vehicle; and
a guide portion (22) that is fixed to the bumper reinforcement and that is disposed at an interior of the energy absorbing body, the guide portion comprising:
a plurality of abutting portions (50) that are configured to contact, from an inner side, at a time of a collision of the vehicle, walls (14T, 14I, 140, 14B) that structure the energy absorbing body; and
a relief portion (60) that is provided between the plurality of abutting portions, and at which an interval between the relief portion and one of said walls is set to be larger than an interval between the abutting portions and said wall, a space being formed between said wall and the relief portion that is configured to receive, at a time of a collision of the vehicle, a crushed portion (90) of the energy absorbing body.

2. The energy absorbing structure of a vehicle of claim 1, wherein
the energy absorbing body is made to have a tubular shape of substantially rectangular cross-section, and
the abutting portions and the relief portions are provided respectively for each of the walls.

3. The energy absorbing structure of a vehicle of claim 1 or claim 2, wherein the abutting portions include surfaces that are provided substantially parallel to the respective walls.

4. The energy absorbing structure of a vehicle of claim 1 or claim 2, wherein
the guide portion includes a plurality of ribs (26) that extend radially toward the walls of the energy absorbing body, and
the abutting portions include end portions of the ribs that extend toward the walls of the energy absorbing body.
